# EUROPEAN PATENT APPLICATION

(11) **EP 1 962 517 A1**
(43) Date of publication of application: **27.08.2008**
(21) Application number: 07270013.1
(22) Date of filing: 21.02.2007
(51) Int. Cl.: H04N 9/73

(54) **Error reduction in image sensors**

(71) Applicant: STMicroelectronics (Research & Development) Limited, Marlow, Buckinghamshire SL7 1YL (GB)
(72) Inventor: Duncan, Ed, Edinburgh, Lothian EH34 5EZ (GB); Kinsey, Andrew, 33 Pinkhill Edinburgh, Lothian EH12 7BF (GB); Grant, David, 33 Pinkhill Edinburgh Lothian EH12 7BF (GB)
(74) Representative: McBride, Peter Hill

(57) **Abstract**

A vignetting-like chromatic error, particularly found in image sensors having pixel dimensions of a few microns, is corrected by applying to each colour channel a gain factor which increases with the radial position of the pixel, and which is also controlled in dependence on ambient colour temperature.

## Description

This invention relates to the correction or reduction of vignette-type errors produced in solid state image sensors.

Vignetting is well known in imaging systems, being the effect which causes image brightness to reduce with increasing distance from the optical axis.

In traditional film cameras, vignetting results from the lens design producing non-uniform brightness, and from the presence of external obstructions such as lens hoods. Such vignetting can only be reduced by improved lens design and by avoiding external obstructions at the edge of the field of view.

Solid state image sensors can suffer vignetting for the same reasons. However, in this case the vignetting can be counteracted electronically by signal processing. It is known to do so by controlling the gain in the output signal channels as a function of the radial distance of the relevant pixel from the optical axis. In known colour sensors, this gain control is applied equally to each of the colour channels, and is essentially a grey scale variation.

We have found that the known anti-vignetting arrangements do no produce acceptable results under all conditions. This is particularly the case with physically small sensors where the individual pixel sizes may be of the order of a few microns, and where simple one- or two-element plastic lenses are used. This situation is common in cameras incorporated in, for example, mobile phones.

It has been found that in these situations the final image may contain vignetting-type errors wherein colour errors are present which increase in significance with increasing radial distance from the optical axis. These errors are of a nature which is noticeable and obtrusive to the viewer. It is believed that this effect is caused by diffraction effects at the surface of the image sensor produced by its small feature size. There may also be a contribution from the use of simple and inexpensive lenses which have non-uniform colour dispersion.

An object of the present invention is to eliminate, or at least reduce, these errors.

The invention provides a method of correcting chromatic vignetting in the output of a solid state image sensor having a pixel array, the method comprising:
(a) detecting the ambient light temperature; and
(b) adjusting the gain of the output signal by varying gain as a function of radial distance from the optical axis; and wherein
(c) the gain adjustment is selected in dependence on the ambient light temperature.

Typically, the output signal comprises RGB colour channels, and the gain of all channels is adjusted for white balance before carrying out step (b).

Preferably the gain adjustment of step (b) is carried out on at least the red and blue of the RGB channels.

The ambient light temperature may suitably be derived from data relating to white balance. The white balance data may be used to classify the ambient lighting conditions as one of a number of standard conditions, such as daylight, dusk, tungsten, and fluorescent.

The channel gains to be applied are preferably read from a look-up table.

From another aspect, the invention provides an image sensor comprising:
a pixel array;
readout means for reading out pixel values to form an image signal;
means for detecting the ambient light temperature;
gain adjustment means for adjusting the gain of the image signal as a function of the radial distance from the optical axis by a factor which is dependent on the ambient light temperature.

Preferably, the pixel array comprises RGB pixels, the image signal comprises RGB channels, and the gain adjustment means operates on at least two of the RGB channels independently; and the image sensor further includes white balance means operable to adjust the gain of all channels to provide white balance.

The white balance means preferably also acts as the ambient light temperature detecting means.

The gain adjustment means may be controlled by a look-up table, which may define gain factors for a number of standard ambient lighting conditions, such as daylight, dusk, tungsten, and fluorescent.

The invention further provides a camera incorporating an image sensor as defined above; and a mobile telephone incorporating such a camera.

An embodiment of the invention will now be described, by way of example only, with reference to the drawings, in which:

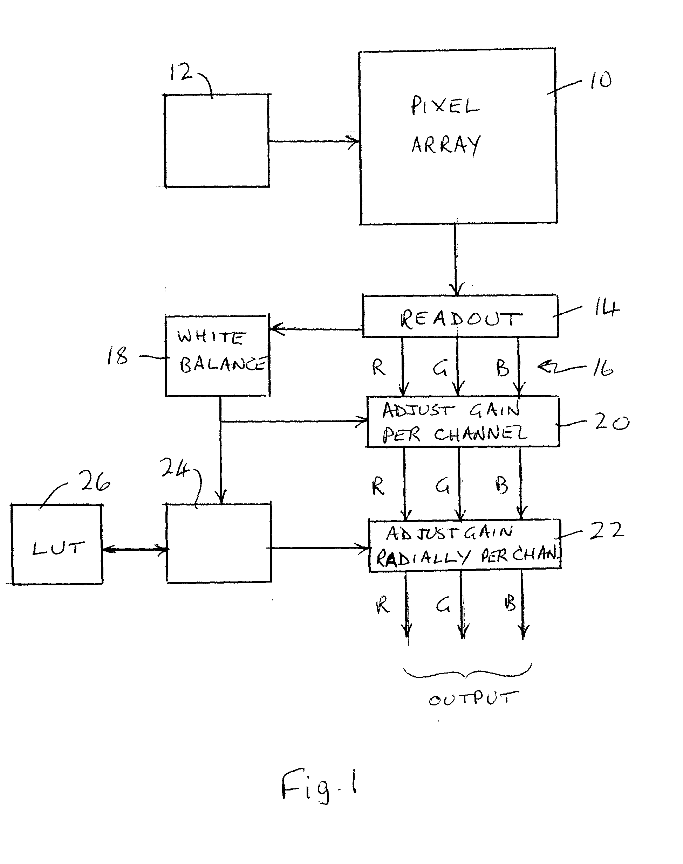

Fig. 1 is a schematic illustration of one embodiment of the invention.

Referring to Fig. 1, an image sensor has a pixel array 10 controlled by a control circuit 12, and a readout circuit 14 which reads out pixel values to provide RGB signals at 16. The precise form of these elements is not significant to the present invention; typically they will be incorporated in a single-chip CMOS image sensor, and the readout circuit will perform image processing functions such as reduction of kT/C noise by correlated double sampling or other known techniques.

A white balance circuit 18 is provided, as is well known *per se*. This provides auto white balance by statistically analysing the content or bias of red, green and blue in any given scene. The model assumes that the average content in any given scene will be equal (i.e. overall gray), and the deviation from this gray model is used to compensate the image signals in such a way as to cancel the effect of any dominant lighting. In Fig. 1 this is indicated by gain adjustment 20, in which the gain of each of the RGB channels is altered by a factor selected to produce a 'gray' average. It will be appreciated that such gain adjustment applies a gain selected for the given channel which is the same across all the pixels of that channel in the pixel array 10.

The white-balanced RGB signals are then further adjusted at 22 in response to an anti-vignetting control 24. In this stage, the gain in a given channel is adjusted as a function of the radial distance of the relevant pixel from the optical axis, in other words pixels further from the axis will be subject to a greater gain than those closer to the axis. The variation in gain will typically be linear, but powers other than unity may be required; this can be established empirically.

We have established that the chromatic vignette-type aberrations which this invention addresses vary with the nature of the ambient light, and require a different balance of RGB corrections also varying with ambient light. Specifically, the required corrections can be defined by reference to the ambient colour temperature, and accordingly the gain adjustment 22 is controlled in dependence on ambient colour temperature.

A convenient means of supplying ambient colour temperature information to the control 24 is to derive this from the existing auto white balance provision. Since the white balance circuit examines the balance of RGB in the overall scene, it contains information which approximates to the colour temperature of the scene. This information can be conveniently defined as a position on a colour temperature locus, or as a vector in a two-dimensional colour space, and the chosen parameter may be used as a control input for the anti-vignetting gain adjustment.

In the present embodiment, the auto white balance information is applied to a look-up table to obtain predefined gain factors for the three channels. These may be based, for reasons of simplicity, and assigning the white balance information to one of a limited number of defined categories. In practical terms, a reasonable degree of correction can be obtained by defining four categories of lighting conditions, namely daylight, dusk, tungsten and fluorescent, which will cover most user situations. For some applications fewer or more categories could be used.

Although certain parts in the foregoing description have been described as "circuits", it will be appreciated that the relevant functions may be performed by a mixture of firmware and software rather than dedicated circuits, as is well known in the art, and that the whole system will normally be incorporated in a single chip.

The embodiment described uses a RGB colour separation scheme, but the invention applies equally to other forms of colour separation. The invention may also find application in monochrome image sensors if very small pixel sizes are used, in view of the diffraction effects discussed above.

In the above embodiment, the ambient colour temperature is derived from the white balance information. However, it is equally possible to derive a measure of the ambient colour temperature in some other way, for example by using a separate RGB sensor (i.e. separate from the pixel array) measuring the overall RGB values of the scene; such sensors are known and commercially available. It would also be feasible to measure only red and blue in the scene, since in many real life situations green level is approximately constant under varying lighting conditions.

The invention thus enables a small and low-cost image sensor to avoid the above-discussed image degradation. The invention is of particular utility in low cost portable devices such as mobile telephones and webcams.

## Claims

1. A method of correcting chromatic vignetting in the output of a solid state image sensor having a pixel array, the method comprising:
(a) detecting the ambient light temperature; and
(b) adjusting the gain of the output signal by varying gain as a function of radial distance from the optical axis; and wherein
(c) the gain adjustment is selected in dependence on the ambient light temperature.

2. The method of claim 1, in which the output signal comprises RGB colour channels, the gain of all channels is adjusted for white balance before carrying out step (b).

3. The method of claim 2, in which the gain adjustment of step (b) is carried out on at least the red and blue of the RGB channels.

4. The method of claim 2 or claim 3, in which the ambient light temperature is derived from data relating to white balance.

5. The method of claim 4, in which the white balance data is used to classify the ambient lighting conditions as one of a number of standard conditions.

6. The method of claim 5, in which said standard conditions are daylight, dusk, tungsten, and fluorescent.

7. The method of claim 5 or claim 6, in which the channel gains to be applied are read from a look-up table.

8. An image sensor comprising:
a pixel array;
readout means for reading out pixel values to form an image signal;
means for detecting the ambient light temperature;
gain adjustment means for adjusting the gain of the image signal as a function of the radial distance from the optical axis by a factor which is dependent on the ambient light temperature.

9. An image sensor according to claim 8, in which the pixel array comprises RGB pixels, the image signal comprises RGB channels, and the gain adjustment means operates on at least two of the RGB channels independently; and further including white balance means operable to adjust the gain of all channels to provide white balance.

10. An image sensor according to claim 9, in which the white balance means acts also as the ambient light temperature detecting means.

11. An image sensor according to any of claims 8 to 10, in which the gain adjustment means is controlled by a look-up table.

12. An image sensor according to claim11, in which the look-up table defines gain factors for a number of standard ambient lighting conditions.

13. An image sensor according to claim 12, in which said standard conditions are daylight, dusk, tungsten, and fluorescent.

14. A camera incorporating an image sensor in accordance with any of claims 8 to 13.

15. A mobile telephone incorporating the camera of claim 14.
